# EUROPÄISCHE PATENTSCHRIFT

(11) **EP 0 667 367 B1**
(45) Veröffentlichungstag und Bekanntmachung des Hinweises auf die Patenterteilung: **06.05.1998**
(21) Anmeldenummer: 95101470.3
(22) Anmeldetag: 03.02.1995
(51) Int. Cl.: C08G 69/26, C08L 77/06, C08L 77/00

(54) **Teilaromatische Copolyamidformmassen mit hoher Kristallinität**
Partially aromatic copolyamid mouldings with high crystallinity
Masses à mouler en polyamide semi-aromatique à cristallinité élevée

(30) Priorität: 10.02.1994 DE 4404250
(43) Veröffentlichungstag der Anmeldung: 16.08.1995
(73) Patentinhaber: BASF Aktiengesellschaft, 67063 Ludwigshafen (DE)
(72) Erfinder: Fisch, Dr. Herbert, D-67157 Wachenheim (DE); Pipper, Gunter, D-67098 Bad Dürkheim (DE); Mühlbach, Dr. Klaus, D-67269 Grünstadt (DE); Görissen, Dr. Heiner, D-67069 Ludwigshafen (DE)

(56) Entgegenhaltungen:
- EP-A- 0 041 130
- EP-A- 0 053 876
- EP-A- 0 070 001
- EP-A- 0 271 308
- EP-A- 0 345 486
- EP-A- 0 505 162
- DE-A- 1 933 395

## Beschreibung

Die Erfindung betrifft teilaromatische teilkristalline thermoplastische Polyamidformmassen, enthaltend
A) 40 bis 100 Gew.-% eines Copolyamids aufgebaut aus
   a₁) 30 bis 44 mol-% Einheiten, welche sich von Terephthalsäure ableiten
   a₂) 6 bis 20 mol-% Einheiten, welche sich von Isophthalsäure ableiten
   a₃) 43 bis 49,5 mol-% Einheiten, welche sich von Hexamethylendiamin ableiten
   a₄) 0,5 bis 7 mol-% Einheiten, welche sich von aliphatischen cyclischen Diaminen mit 6 bis 30 C-Atomen ableiten
   wobei die Molprozente der Komponenten a₁) bis a₄) zusammen 100 % ergeben und
B) 0 bis 50 Gew.-% eines faser- oder teilchenförmigen Füllstoffes
C) 0 bis 30 Gew.-% eines kautschukelastischen Polymerisates
D) 0 bis 30 Gew.-% üblicher Zusatzstoffe und Verarbeitungshilfsmittel
wobei die Gewichtsprozente der Komponenten A) bis D) zusammen 100 % ergeben.

Weiterhin betrifft die Erfindung die Verwendung dieser Formmassen zur Herstellung von Fasern, Folien und Formkörpern sowie die aus den erfindungsgemäßen Formmassen erhältlichen Formkörper.

Transparente, amorphe Polyamide aus Bis(4-aminocyclohexyl)methan, Terephthalsäure/Isophthalsäure und Hexamethylendiamin sind aus der DE-A 19 33 395 bekannt.

Aus der EP-A 345 486 und EP-A 271 308 sind amorphe Polyamide aus Hexamethylendiamin/Bis (4-amino-3-alkylcyclohexyl)alkanen mit Terephthalsäure/Isophthalsäure bekannt.

Aus der DE-A 23 43 694 und DE-A 23 48 750 sind füllstoffhaltige amorphe Polyamide aus den vorstehend genannten Einheiten bekannt.

Blendzusammensetzungen derartiger amorpher Polyamide mit aliphatischen Polyamiden sind aus der EP-A 70 001 bekannt.

Die bekannten Copolyamide sind gemäß der technischen Lehre der Schriften amorph, d.h. sie sind transparent und zeigen nur sehr geringe kristalline Anteile.

Dies ist zwar für Anwendungen von Vorteil, wobei eine Resistenz gegen Chemikalien oder Durchsichtigkeit (Transparenz) der Formkörper erforderlich ist, jedoch zeigen amorphe Polyamide Nachteile bei Anwendungen z.B. im Motorraumbereich, die eine dauerhafte Bestandigkeit bei hoher Umgebungstemperatur erfordern. Teilaromatische Copolyamide aus Terephthalsaure/Isophthalsaure Einheiten mit unterschiedlichen anderen Aufbaukomponenten sind u.a. aus der EP-A 121 984, EP-A 291 096, US 4,607,073, EP-A 217 960 und EP-A 299 444 bekannt.

Hohe Anteile an Hexamethylendiamin/Terephthalsaure verbessern zwar die Kristallinität und erhöhen signifikant die Glastemperaturen, jedoch verschlechtert sich mit zunehmendem Gehalt dieser Einheiten die Verarbeitbarkeit (Temperaturen meist über 320°C, für füllstoffhaltige Polyamide 350°C) und die Herstellung derartiger Polyamide (siehe R.D. Chapman et al., Textile Research Journal 1981, S. 564).

Aufgabe der vorliegenden Erfindung war es, teilkristalline teilaromatische Copolyamidformmassen zur Verfügung zu stellen, die einen hohen Kristallinitätsgrad und Glastemperatur bei ausreichend hohen Schmelzpunkten aufweisen, so daß die Copolyamide besser verarbeitbar sind. Gleichzeitig sollen die Copolyamide bessere mechanische Eigenschaften (insbesondere multiaxiale Schlagzähigkeit) und Oberflächenqualität von faserverstärkten Formkörpern aufweisen.

Demgemäß wurden die eingangs definierten Formmassen gefunden.

Bevorzugte Ausführungsformen sind den Unteransprüchen zu entnehmen.

Als Komponente A) enthalten die erfindungsgemäßen teilaromatischen teilkristallinen thermoplastischen Polyamidformmassen 40 bis 100, vorzugsweise 50 bis 100 und insbesondere 70 bis 100 Gew.-% eines Copolyamids, aufgebaut aus
a₁) 30 bis 44, vorzugsweise 32 bis 40 und insbesondere 32 bis 38 mol-% Einheiten, welche sich von Terephthalsäure ableiten,
a₂) 6 bis 20, vorzugsweise 10 bis 18 und insbesondere 12 bis 18 mol-% Einheiten, welche sich von Isophthalsäure ableiten,
a₃) 43 bis 49,5, vorzugsweise 46 bis 48,5 und insbesondere 46,3 bis 48,2 mol-% Einheiten, welche sich von Hexamethylendiamin ableiten,
a₄) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
wobei die Molprozente der Komponenten a₁) bis a₄) zusammen 100 % ergeben.

Die Diamineinheiten a₃) und a₄) werden vorzugsweise äquimolar mit den Dicarbonsäureeinheiten a₁) und a₂) umgesetzt.

Geeignete Monomere a4) sind vorzugsweise cyclische Diamine der Formel 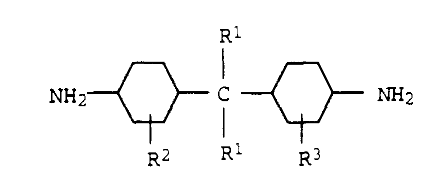 in der
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeutet.

Besonders bevorzugte Diamine a4) sind Bis(4-aminocyclohexyl)methan, Bis(4-amino-3-methylcyclohexyl)methan, Bis(4-aminocyclohexyl)-2,2-propan und Bis(4-amino-3-methylcyclohexyl)-2,2-propan.

Als weitere Monomere a₄) seien 1,3- und 1,4-Cyclohexandiamin und Isophorondiamin genannt.

Neben den vorstehend beschriebenen Einheiten a₁) bis a₄) können die teilaromatischen Copolyamide A) bis zu 4, vorzugsweise bis zu 3,5 Gew.-%, bezogen auf A), an weiteren polyamidbildenden Monomeren a₅) enthalten, wie sie von anderen Polyamiden bekannt sind.

Aromatische Dicarbonsäuren a₅) weisen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure und Phenoxyterephthalsäure.

Weitere polyamidbildende Monomere a₅) können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 290°C bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den teilaromatischen Copolyamide sollen erfindungsgemäß solche verstanden werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von ΔHₖᵣᵢₛₜ. bestimmt.

Selbstverständlich können auch Mischungen der teilaromatischen Copolyamide umgesetzt werden, wobei das Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 340°C erhitzt, wobei ein Druck von 10 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129195 und 129 196 beschriebenen Verfahren.

Gemaß diesen Verfahren wird eine wäßrige Lösung der Monomeren a₁) bis a₄) sowie gegebenenfalls a₅) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponenten B) und gegebenenfalls C) und/oder D) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasen; kondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Als weiteren Bestandteil können die erfindungsgemäßen Copolyamide 0 bis 50, vorzugsweise bis 35, insbesondere 15 bis 35 Gew.% eines faser- oder teilchenförmigen Füllstoffes (Komponente (B)) oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter (Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Als Komponente (C) können die erfindungsgemäßen thermoplastischen Formmassen 0 bis 30, vorzugsweise bis 20 und insbesondere 10 bis 15 Gew.-% eines kautschukelastischen Polymerisats enthalten (oft auch als Schlagzähmodifier oder Kautschuk bezeichnet). Bevorzugte kautschukelastische Polymerisate sind Polymerisate auf Basis von Olefinen, die aus folgenden Komponenten aufgebaut sind:
C₁) 40 bis 100 Gew.-% mindestens eines α-Olefins mit 2 bis 8 C-Atomen
C₂) 0 bis 50 Gew.-% % eines Diens
C₃) 0 bis 45 Gew.-% eines C₁-C₁₂-Alkylesters der Acrylsäure oder Methacrylsäure oder Mischungen derartiger Ester,
C₄) 0 bis 40 Gew.-% einer ethylenisch ungesättigen Mono- oder Dicarbonsäure oder einem funktionellen Derivat einer solchen Säure
C₅) 0 bis 40 Gew.-% eines Epoxygruppen enthaltenden Monomeren,
C₆) 0 bis 5 Gew.-% sonstiger radikalisch polymerisierbaren Monomerer, mit der Maßgabe, daß die Komponente (C) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/ 100 C-Atome aufweisen können.

Als Dien-Monomere C₂) für EPDM-Kautschuke seien beispielsweise konjugiert Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von a-Olefinen mit 2-8 C-Atomen, insbesondere des Ethylens, mit C₁-C₁₈-Alkylestern der Acrylsäure und/oder Methacrylsäure.

Grundsätzlich eignen sich alle primären und sekundären C₁-C₁₈-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester C₃) an den Olefinpolymerisaten beträgt 0-60, vorzugsweise 10-50 und insbesondere 30-45 Gew.-%.

Anstelle der Ester C₃) oder zusätzlich zu diesen können in den Olefinpolymerisaten auch säurefunktionelle und/oder latent säurefunktionelle Monomere ethylenisch ungesättigter Mono- oder Dicarbonsäuren C₄) oder Epoxygruppen aufweisende Monomere C₅) enthalten sein.

Als Beispiele für Monomere C₄) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut

R¹C(COOR²)=C(COOR³)R⁴ (I)

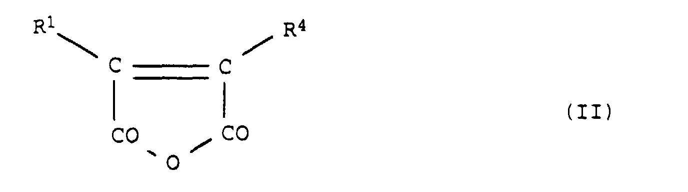

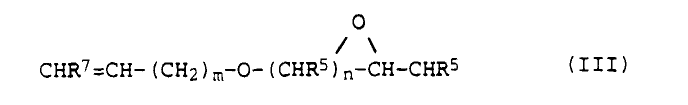

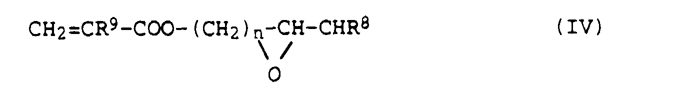

wobei die Reste R¹ - R⁹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R¹ - R⁷ ist Wasserstoff, für m der Wert 0 oder 1 und für n der Wert 1. Die entsprechenden Verbindungen sind Maleinsäure, Fumarsäure, Maleinsäureanhydrid, C₄) bzw. Alkenylglycidylether oder Vinylglycidylether C₅).

Bevorzugte Verbindungen der Formeln I, II, III und IV sind Maleinsäure und Maleinsäureanhydrid als Komponente C₄) und Epoxygruppen-enthaltende Ester der Acrylsäure und/oder Methacrylsäure, wobei Glycidylacrylat und Glycidylmethacrylat (als Komponente C₅) besonders bevorzugt werden.

Der Anteil der Komponenten C₄) bzw. C₅) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| | |
| 0,1 bis 20, | insbesondere 0,15 bis 15 Gew.% Glycidylacrylat und/oder Glycidylmethacrylat, Acrylsäure und/oder Maleinsäureanhydrid, |
| | |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere C₆) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere (C) beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (C) bis zu 5 Gew.%, vorzugsweise nicht mehr als 3 Gew.%, bezogen auf (C).

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere (C) können auch nach anderen üblichen Verfahren, z.B. durch Suspensionspolymerisation, hergestellt werden.

Neben der wesentlichen Komponente A) sowie gegebenenfalls B) und C) können die erfindungsgemäßen Formmassen übliche Zusatzstoffe und Verarbeitungshilfsmittel D) enthalten. Deren Anteil beträgt im allgemeinen bis zu 30, vorzugsweise bis zu 15 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfarbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen bei Anwesenheit der Komponenten B) - D) können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch höhere Wärmeformbeständigkeit, gute multiaxiale Schlagzähigkeit, ausreichend hohe Schmelzpunkte bei gleichzeitig hoher Glasübergangstemperatur und hohem Kristallinitätsgrad aus. Insbesondere lassen sie sich problemlos thermoplastisch verarbeiten und eignen sich demgemäß zur Herstellung von Fasern, Folien und Formkörpern. Faserverstärkte Formkörper weisen eine sehr gute Oberfläche auf, so daß sie insbesondere für Anwendungen im Fahrzeugbau geeignet sind.

### Beispiele 1 und 3

Eine 60 %ige wäßrige Lösung, bestehend aus Terephthalsäure, Isophthalsäure, Hexamethylendiamin bzw. Bis(4-amino-3-methylcyclohexyl)methan oder Bis(4-aminocyclohexyl)methan wurde in den in der Tabelle angegebenen Mengenverhältnissen aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer betrug 50 sec. Das aus dem Verdampfer austretende Gemisch aus Prapolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositätszahl von 48 ml/g (gemessen als 0,5 %ige Lösung bei 25°C in 96 gew.-%iger H₂SO₄ gemäß DIN 53 246).

Das Produkt wies in etwa eine Äquivalenz von Carboxyl- und Aminoendgruppen auf.

Im Austragsextruder wurde die Schmelze dann auf Normaldruck entspannt und bei einer Verweilzeit von weniger als 1 Minute praktisch nicht mehr weiter kondensiert.

Anschließend wurden die Produkte in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 8 bis 18 h. Im Verlauf dieser Temperung wurde gegebenenfalls auch ein Großteil der extrahierbaren Restmonomere vom Wasserdampf extrahiert.

### Beispiel 2

In einem 5 l Laborautoklaven wurden 2 kg einer Monomermischung entsprechend Beispiel 1 mit 700 ml Wasser vorgelegt. Die Mischung war in 5 Glasröhren zu je 800 ml Inhalt verteilt. Der Autoklav wurde 1 h auf 350°C aufgeheizt, wobei der resultierende Wasserdampfdruck nach Erreichen von 20 bar durch Entspannen überschüssigen Wassers konstant gehalten wurde. Danach wurden Temperatur und Druck noch 1 h konstant gehalten. Anschließend wurde auf 330°C abgekühlt und der Autoklav auf Normaldruck entspannt. Die Heizung des Autoklaven wurde abgeschaltet, wobei nach ca. 3 h Raumtemperatur erreicht war.

Die Glasröhren wurden aus dem Autoklaven entnommen und deren Inhalt grob gemahlen. Das erhaltene Produkt wurde in fester Phase bei 198°C unter Stickstoff 10 h auf eine Viskositätszahl von 115 ml/g nachkondensiert.

### Vergleichsbeispiele 1 bis 3

In einem 10 l Laborautoklaven wurden 3 kg einer Monomermischung, die die in der Tabelle aufgeführten Polymere ergaben, mit 2500 ml Wasser vorgelegt. Die Herstellung und Aufarbeitung erfolgte gemäß Beispiel 2. Die Copolyamide wiesen nach der Nachkondensation in fester Phase unter Stickstoff bei 196°C (10 h) eine VZ von 114 ml/g auf.

### Beispiele 4 bis 6 und Vergleichsbeispiele 4 bis 6

70 Gew.-% der Copolyamide A), hergestellt nach den vorstehenden Methoden der Beispiele 1 bis 3 und Vergleichsbeispielen 1 bis 3 wurde mit 30 Gew.-% Glasfasern (Komponente B: mittlerer Durchmesser: 10 µm; aminosilanisierte Oberfläche) auf einem Zweischneckenextruder bei 320°C in üblicher Weise konfektioniert.

### Es wurden folgende Prüfungen durchgeführt:

Der Kristallinitätsgrad (KG) wurde über Röntgenkleinwinkelstreuung an Granulatkörnern des unverstärkten Materials bestimmt. Als relatives Maß für den Kristallinitätsgrad wurde die spezifische Schmelwärme ΔHₖᵣᵢₛₜ. mittels Differential Scanning Colorimetrie (DSC 9900 der Firma DuPont) bei 20°C/min Aufheizrate bestimmt.

Die multiaxiale Schlagzähigkeit W₅₀ wurde gemäß DIN 53 443 an Normprüfkörpern bestimmt.

Die glasfaserverstärkten Copolyamide wurden bei 320 bis 330°C zu Rundscheiben (0̸ 500 mm, Dicke 1 mm) verarbeitet. An diesen wurden die Glanzwerte gemäß DIN 67 530 entsprechend Standard A bestimmt.

Die Ergebnisse der Messungen und die Zusammensetzungen der Copolyamidformmassen sind der Tabelle zu entnehmen.

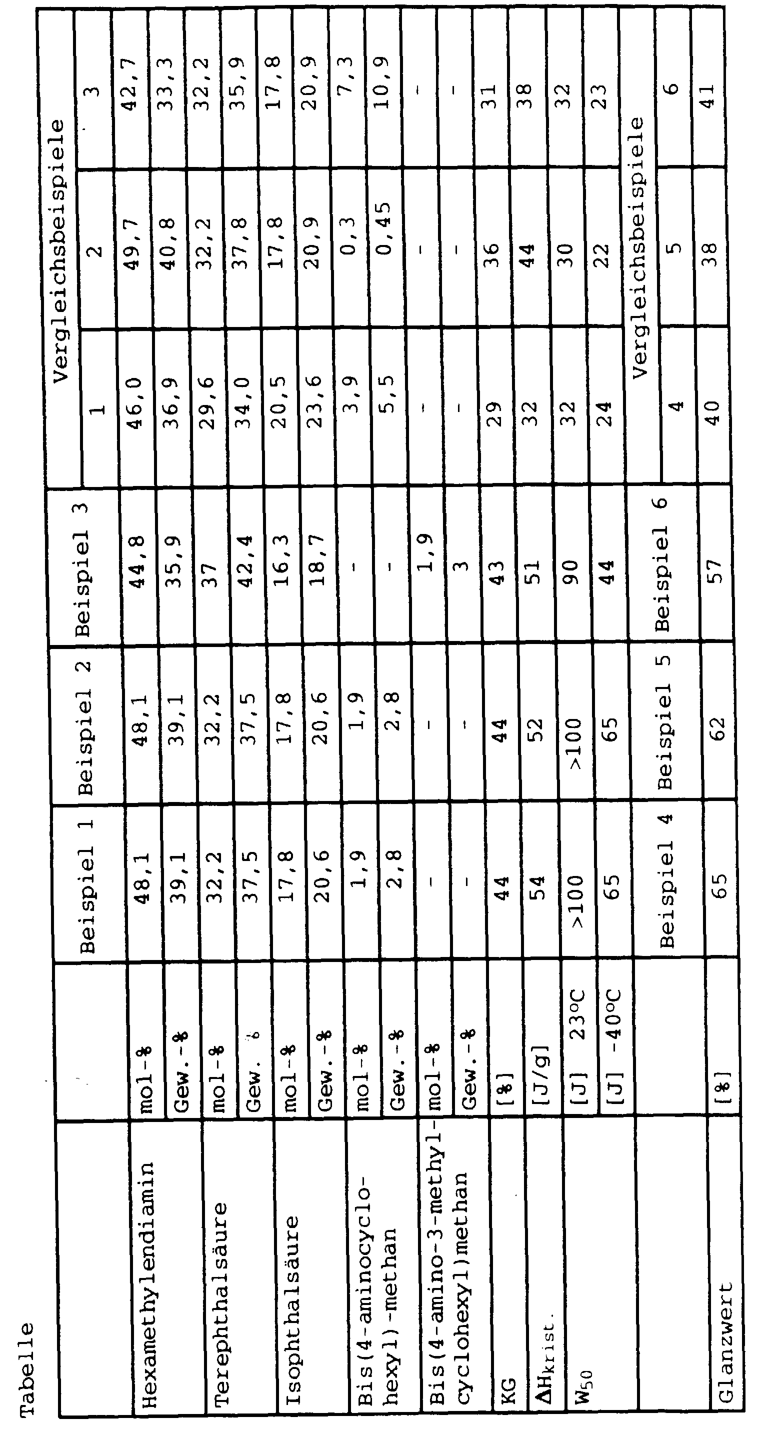

## Patentansprüche

1. Teilaromatische teilkristalline thermoplastische Polyamidformmassen, enthaltend
A) 40 bis 100 Gew.-% -% eines Copolyamids aufgebaut aus
a₁) 30 bis 44 mol-% Einheiten, welche sich von Terephthalsäure ableiten
a₂) 6 bis 20 mol-% Einheiten, welche sich von Isophthalsäure ableiten
a₃) 43 bis 49,5 mol-% Einheiten, welche sich von Hexamethylendiamin ableiten
a₄) 0,5 bis 7 mol-% Einheiten, welche sich von aliphatischen cyclischen Diaminen mit 6 bis 30 C-Atomen ableiten
wobei die Molprozente der Komponenten a₁) bis a₄) zusammen 100 % ergeben und
B) 0 bis 50 Gew.-% -% eines faser- oder teilchenförmigen Füllstoffes
C) 0 bis 30 Gew.-% -% eines kautschukelastischen Polymerisates
D) 0 bis 30 Gew.-% -% üblicher Zusatzstoffe und Verarbeitungshilfsmittel
wobei die Gewichtsprozente der Komponenten A) bis D) zusammen 100 % ergeben.

2. Polyamidformmassen nach Anspruch 1, in denen das Copolyamid A) aufgebaut ist aus
a₁) 32 bis 40 mol-%
a₂) 10 bis 18 mol-%
a₃) 46 bis 48,5 mol-%
a₄) 1,5 bis 4 mol-%

3. Polyamidformmassen nach den Ansprüchen 1 oder 2, in denen das aliphatische cyclische Diamin a₄) aus
Bis(4-aminocyclohexyl)methan oder
Bis(4-amino-3-methylcyclohexyl)methan
oder deren Mischungen aufgebaut ist.

4. Polyamidformmassen nach den Ansprüchen 1 bis 3, in denen das Copolyamid A) einen Triamingehalt von weniger als 0,5 Gew.-% aufweist.

5. Polyamidformmassen nach den Ansprüchen 1 bis 4, in denen das Copolyamid A) einen Kristallinitätsgrad größer 30 % aufweist.

6. Verwendung der Polyamidformmassen gemäß den Ansprüchen 1 bis 5 zur Herstellung von Fasern, Folien und Formkörpern.

7. Formkörper, erhältlich aus den Polyamidformmassen gemäß den Ansprüchen 1 bis 5.

## Claims

1. A partly aromatic semicrystalline thermoplastic polyamide molding material, containing
A) from 40 to 100% by weight of a copolyamide composed of
a₁) from 30 to 44 mol % of units which are derived from terephthalic acid,
a₂) from 6 to 20 mol % of units which are derived from isophthalic acid,
a₃) from 43 to 49.5 mol % of units which are derived from hexamethylenediamine and
a₄) from 0.5 to 7 mol % of units which are derived from aliphatic cyclic diamines of 6 to 30 carbon atoms,
the molar percentages of components a₁) to a₄) together giving 100%, and
B) from 0 to 50% by weight of a fibrous or particulate filler,
C) from 0 to 30% by weight of an elastomeric polymer and
D) from 0 to 30% by weight of conventional additives and processing assistants,
the percentages by weight of components A) to D) together giving 100%.

2. A polyamide molding material as claimed in claim 1, in which the copolyamide A) is composed of
from 32 to 40 mol % of a₁),
from 10 to 18 mol % of a₂),
from 46 to 48.5 mol % of a₃) and
from 1.5 to 4 mol % of a₄).

3. A polyamide molding material as claimed in claim 1 or 2, in which the aliphatic cyclic diamine a₄) is composed of
bis(4-aminocyclohexyl)methane or
bis(4-amino-3-methylcyclohexyl)methane
or a mixture thereof.

4. A polyamide molding material as claimed in any of claims 1 to 3, in which the copolyamide A) has a triamine content of less than 0.5% by weight.

5. A polyamide molding material as claimed in any of claims 1 to 4, in which the copolyamide A) has a crystallinity greater than 30%.

6. Use of a polyamide molding material as claimed in any of claims 1 to 5 for the production of fibers, films and moldings.

7. A molding obtainable from a polyamide molding material as claimed in any of claims 1 to 5.

## Revendications

1. Masses à mouler en polyamides thermoplastiques partiellement aromatiques et partiellement cristallins, qui contiennent :
A) 40 à 100% en poids d'un copolyamide constitué de
a₁) 30 à 44% molaires d'unités qui dérivent de l'acide téréphtalique,
a₂) 6 à 20% molaires d'unités qui dérivent de l'acide isophtalique,
a₃) 43 à 49,5% molaires d'unités qui dérivent de l'hexaméthylènediamine,
a₄) 0,5à7% molaires d'unités qui dérivent de diamines cycliques aliphatiques qui comportent de 6 à 30 atomes de carbone,
où les pourcentages molaires des composants a₁) à a₄) s'additionnent pour faire 100%, et
B) 0 à 50% en poids d'une charge fibreuses ou particulaire,
C) 0 à 30% en poids d'un copolymère présentant l'élasticité du caoutchouc,
D) 0 à 30% en poids d'adjuvants d'ouvrabilité et d'additifs usuels,
où les pourcentages pondéraux des composants A) à D) s'additionnent pour faire 100%.

2. Masses à mouler en polyamides suivant la revendication 1, dans lesquelles le copolyamide A) est constitué de :
a₁) 32 à 40% molaires,
a₂) 10 à 18% molaires,
a₃) 46 à 48,5% molaires,
a₄) 1,5 à 4%molaires.

3. Masses à mouler en polyamides suivant les revendications 1 et 2, dans lesquelles la diamine cyclique aliphatique a₄) est constituée
de bis(4-aminocyclohexyl)méthane, ou
de bis(4-amino-3-méthylcyclohexyl)méthane,
ou de leurs mélanges.

4. Masses à mouler en polyamides suivant les revendications 1 à 3, dans lesquelles le copolyamide A) présente une teneur en triamine inférieure à 0,5% en poids.

5. Masses à mouler en polyamides suivant les revendications 1 à 4, dans lesquelles le copolyamide A) présente un degré de cristallinité supérieur à 30%.

6. Utilisation des masses à mouler en polyamides suivant les revendications 1 à 5 pour la fabrication de fibres, de feuilles et d'articles moulés.

7. Articles moulés que l'on peut obtenir à partir des masses à mouler en polyamides suivant les revendications 1 à 5.
